# FASCICULE DE BREVET EUROPEEN

(11) **EP 1 860 362 B1**
(45) Date de publication et mention de la délivrance du brevet: **29.07.2009**
(21) Numéro de dépôt: 07290616.7
(22) Date de dépôt: 15.05.2007
(51) Int. Cl.: F16L 21/08

(54) **Raccord de liaison**
Rohrkupplung
Pipe connector

(30) Priorité: 22.05.2006 FR 0604574
(43) Date de publication de la demande: 28.11.2007
(73) Titulaire: Saint-Gobain PAM, 54000 Nancy (FR)
(72) Inventeur: Bidu, Philippe, 54200 Dommartin lès Toul (FR); Martin, José, 52220 Sommevoire (FR)
(74) Mandataire: Domenego, Bertrand

(56) Documents cités:
- WO-A-02/16815
- DE-A1- 3 002 205
- FR-A- 2 163 986
- US-A- 3 973 792

## Description

La présente invention concerne un raccord de liaison entre un bout à emboîtement et un bout uni, du type définissant un axe central et comportant :
- au moins un élément de verrouillage muni d'une surface de verrouillage, radialement mobile par rapport à l'axe central entre une position de libération dans laquelle la surface de verrouillage est dégagée d'une surface extérieure du bout uni et une position de verrouillage dans laquelle la surface de verrouillage s'applique sur la surface extérieure du bout uni,
- une contre-bride adaptée pour déplacer l'élément ou chaque élément de verrouillage entre sa position de libération et sa position de verrouillage,
- au moins une rampe disposée sur l'un des éléments de verrouillage ou contre-bride,
- un organe d'actionnement de la ou de chaque rampe disposé sur l'autre des éléments de verrouillage ou contre-bride.

Un tel raccord est destiné notamment à la liaison d'un élément de tuyauterie tubulaire réalisé en fonte ou en tout autre matériau, avec une conduite à surface extérieure lisse, et plus particulièrement une conduite réalisée en matière plastique, tel que du poly (chlorure de vinyle), du polyéthylène ou du polypropylène ou tout autre matériau.

Un tel raccord est connu par exemple du document WO 02/16815, qui permet, en plus d'assurer l'étanchéité, un verrouillage axial d'une conduite 14 formant un bout uni qui est inséré dans un bout à emboîtement d'un élément de tuyauterie tubulaire 12, c'est à dire une immobilisation axiale des deux éléments l'un par rapport à l'autre.

Ce raccord comporte une bague de serrage 16 qui est rapportée à l'extrémité libre du bout à emboîtement et qui permet d'appliquer une garniture périphérique de verrouillage 18 contre le bout uni par un mouvement axial de la bague de serrage.

Le bout à emboîtement comporte des ergots 26 permettant le vissage de la bague de serrage 16. Ces ergots 26 coopèrent avec quatre rampes hélicoïdales 28 qui font saillie sur la surface intérieure de la bague de serrage 16. Ces ergots et ces rampes forment des moyens de vissage permettant une sollicitation axiale de la bague de serrage 16 vers le bout à emboîtement.

Le mouvement de serrage de la garniture de verrouillage 18 est exclusivement généré par la coopération d'une rampe et d'une contre-rampe situées sur la garniture de verrouillage et sur la bague de serrage.

Ce raccord tubulaire présente les inconvénients suivants :
- la réalisation des rampes hélicoïdales sur la bague de serrage pose des problèmes techniques notamment lorsque ces éléments sont fabriqués en fonte et se traduit par des coûts élevés de réalisation,
- le mouvement axial de la bague de serrage déplace éventuellement la garniture de verrouillage et la conduite à bout uni lors de la mise en pression, pouvant ainsi nuire à l'efficacité du verrouillage.

L'invention a pour objet de pallier ces inconvénients et de proposer un raccord de liaison qui permette une fabrication économique tout en assurant un meilleur verrouillage.

A cet effet, l'invention a pour objet un raccord de liaison du type indiqué, caractérisé en ce que la ou chaque rampe est inclinée dans la direction circonférentielle autour de l'axe central et en ce que l'organe d'actionnement est adapté pour déplacer l'élément ou chaque élément de verrouillage entre ses positions de libération et de verrouillage en agissant sur la ou chaque rampe par une rotation de la contre-bride autour de l'axe central par rapport à l'élément de verrouillage.

Selon des modes particuliers de réalisation, l'invention comporte l'une ou plusieurs des caractéristiques suivantes :
- l'organe d'actionnement est adapté pour déplacer l'élément ou chaque élément de verrouillage entre ses positions de libération et de verrouillage en agissant sur la ou chaque rampe et ce exclusivement par une rotation de la contre-bride autour de l'axe central par rapport à l'élément de verrouillage,
- l'organe d'actionnement est une contre-rampe complémentaire de la rampe,
- la rampe est disposée sur l'élément ou chaque élément de verrouillage, et l'organe d'actionnement est disposé sur la contre-bride,
- la ou chaque rampe définit, en coupe selon un plan perpendiculaire à l'axe central, un segment de spirale,
- le segment de spirale a une équation qui, en coordonnées polaires, répond à la formule r(θ) = r₀ + k.x θ où
   - r(θ) est le rayon du segment de spirale par rapport à l'axe central,
   - r₀ est le rayon minimal du segment de spirale à θ = 0,
   - k est un paramètre > O, et
   - θ est l'angle autour de l'axe central,
- le raccord comprend au moins deux rampes disposées symétriquement autour de l'axe central, ainsi que deux contre-rampes complémentaires des rampes,
- la ou chaque rampe est également inclinée par rapport à l'axe central d'un angle qui converge vers l'axe central lorsqu'on s'éloigne du bout à emboîtement,
- le raccord comprend des moyens de solidarisation en rotation autour de l'axe central de l'élément ou des éléments de verrouillage avec le bout à emboîtement ainsi que des moyens de liaison exclusivement en rotation autour de l'axe central de la contre-bride avec le bout à emboîtement, de telle sorte que lors d'une rotation de la contre-bride, les éléments de verrouillage restent immobiles axialement selon l'axe central,
- les moyens de solidarisation en rotation comprennent au moins une saillie axiale solidaire d'un élément de verrouillage, la saillie s'étendant dans un évidemment axial complémentaire ménagé dans le bout à emboîtement,
- les moyens de liaison exclusivement en rotation comprennent une rainure exclusivement circonférentielle ménagée dans l'un de la contre-bride ou du bout à emboîtement et un ergot radial complémentaire de la rainure et disposé sur l'autre du bout à emboîtement ou de la contre-bride,
- les éléments de verrouillage sont disposés sur une bague de verrouillage déformable élastiquement,
- l'élément ou chaque élément de verrouillage est mobile entre sa position de libération et sa position de verrouillage en rotation autour d'un axe de basculement décalé de l'axe central et perpendiculaire à celui-ci, et dans sa position de libération, la surface de verrouillage est inclinée d'un angle supérieur à 0° par rapport à l'axe central,
- dans sa position de verrouillage, la surface de verrouillage est sensiblement parallèle à l'axe central,
- le raccord comporte des moyens de blocage en rotation de la contre-bride par rapport à l'élément ou à chaque élément de verrouillage lorsque l'élément ou chaque élément de verrouillage se trouve dans sa position de verrouillage,
- les moyens de blocage en rotation comprennent un cliquet élastique disposé entre la contre-bride et au moins un élément de verrouillage et coopérant avec une surface crantée solidaire de cet élément de verrouillage, et
- l'élément ou chaque élément de verrouillage est muni d'une patte de démontage s'étendant en dehors d'une ouverture de la contre-bride.

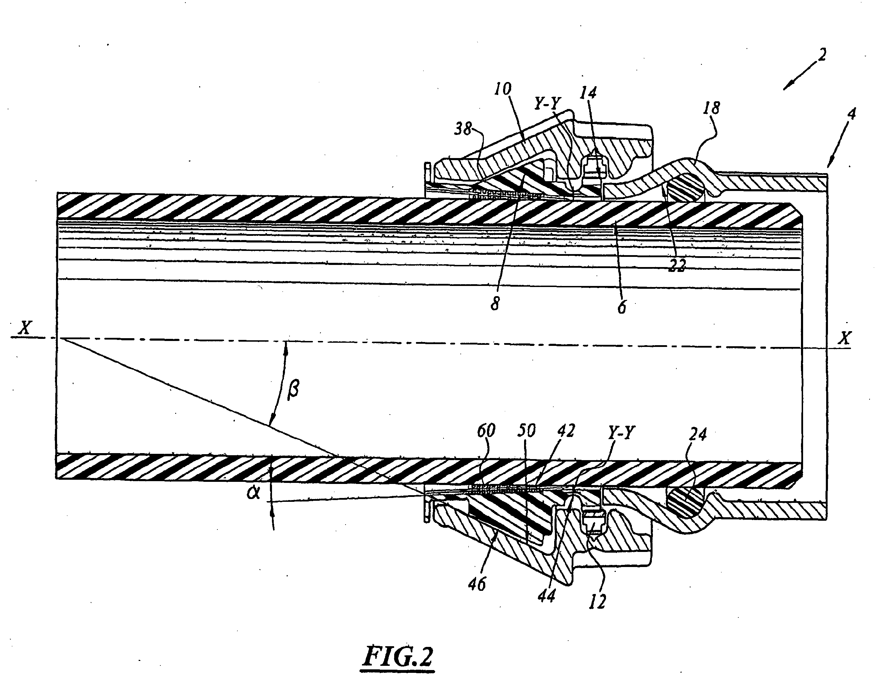

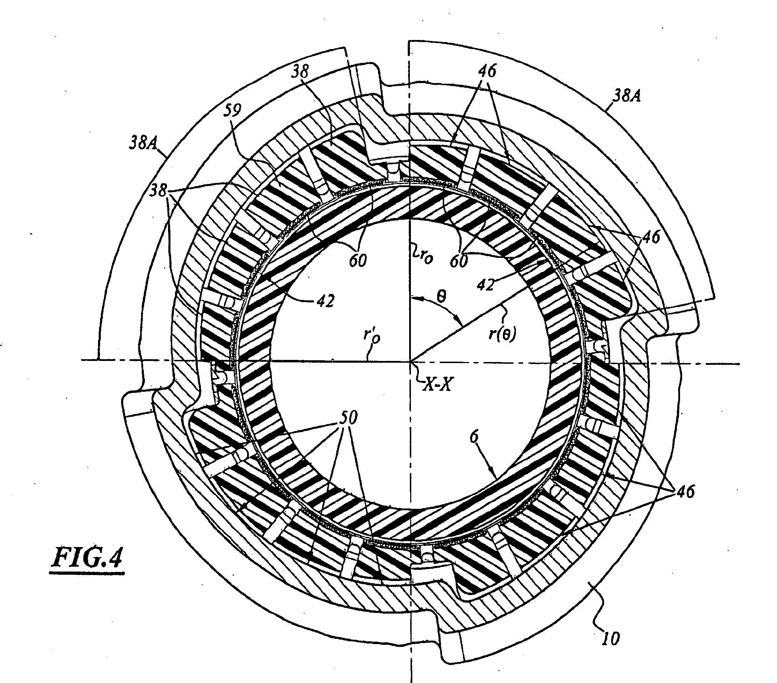

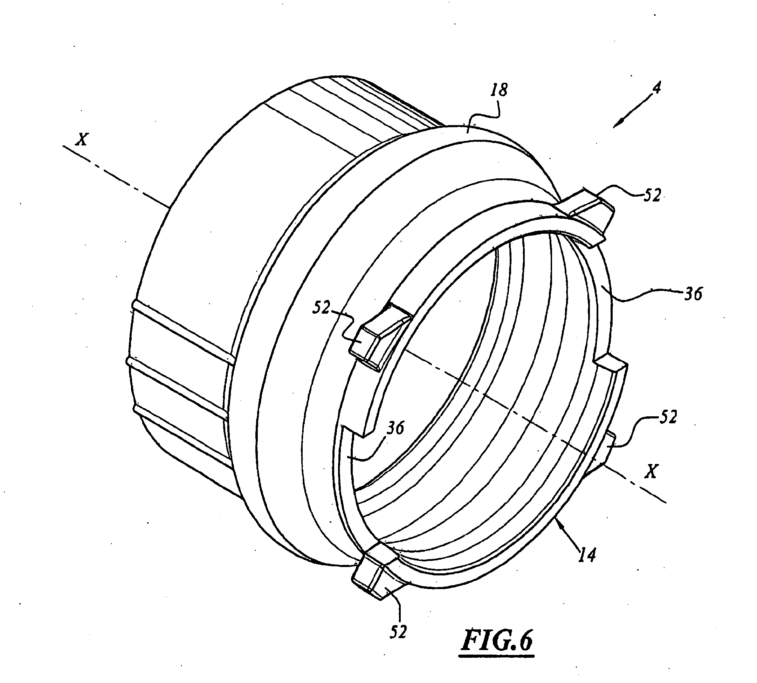

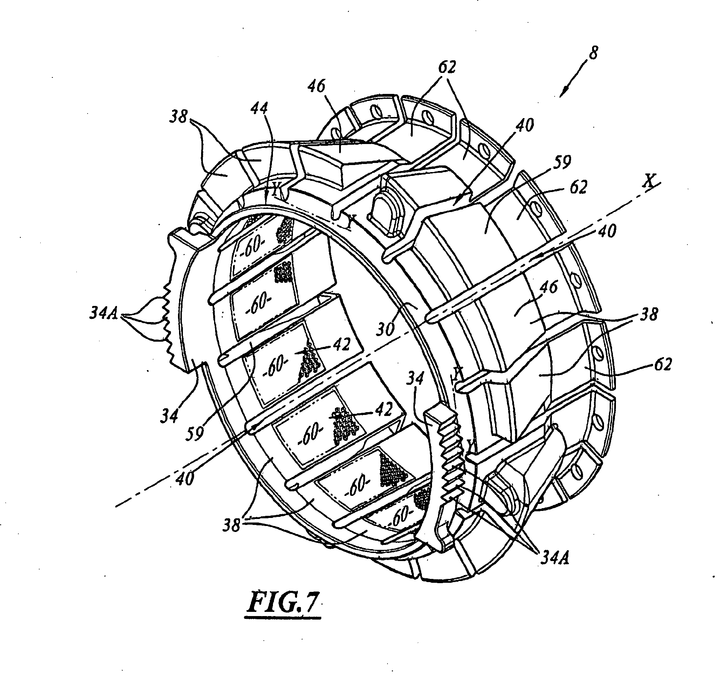

L'invention sera mieux comprise à la lecture de la description qui va suivre, donnée uniquement à titre d'exemple et faite en se référant aux dessins annexés, sur lesquels :
- la Figure 1 est une vue en perspective longitudinale d'un raccord de liaison selon l'invention;
- la Figure 2 est une vue en coupe longitudinale du raccord de la Figure 1 à l'état non verrouillé;
- la Figure 3 est une vue de côté du raccord de la Figure 1 à l'état non verrouillé;

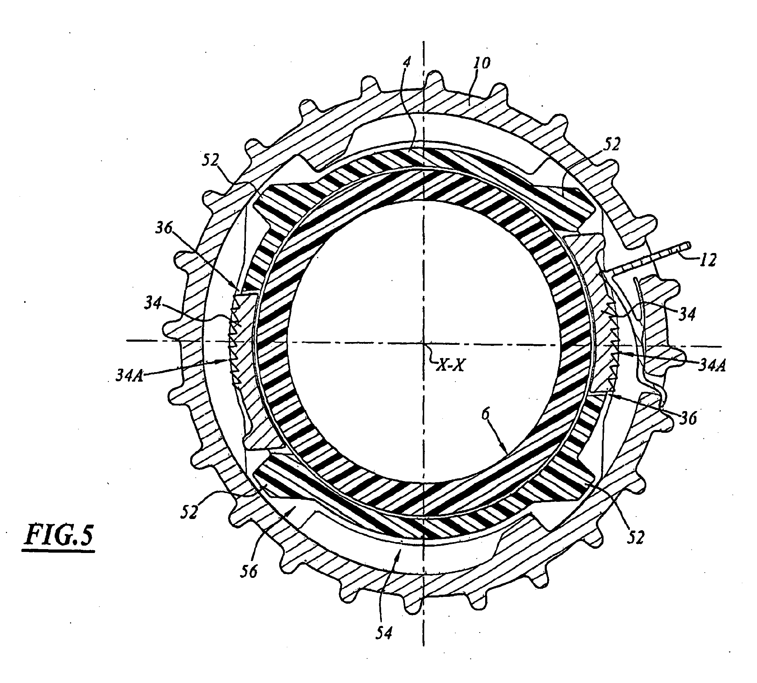

- les Figure 4 et 5 sont des vues en coupe selon les plans IV-IV et V-V de la Figure 3 ;
- la Figure 6 est une vue en perspective à plus grande échelle du bout à emboîtement du raccord de la Figure 1 ;
- la Figure 7 est une vue en perspective à plus grande échelle de la garniture de verrouillage selon l'invention ;

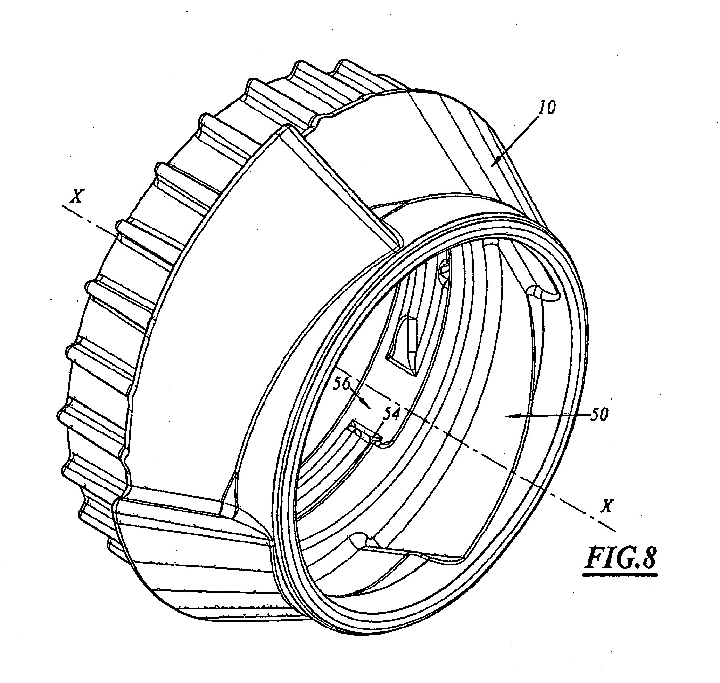

- la Figure 8 est une vue en perspective à plus grande échelle de la contre-bride selon l'invention ;

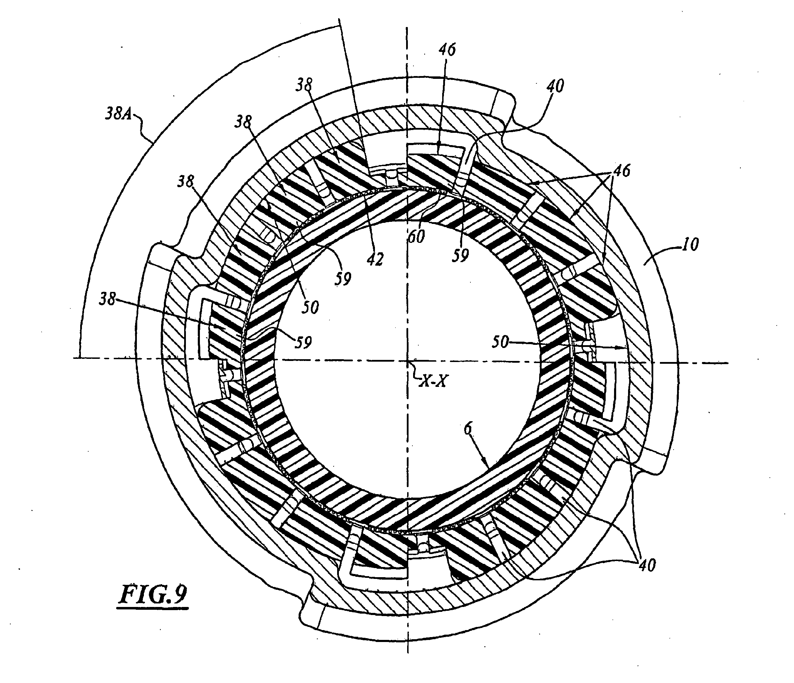

- les Figure 9 et 10 sont des vues correspondant à celles des Figures 4 et 5, le raccord étant à l'état verrouillé ; et

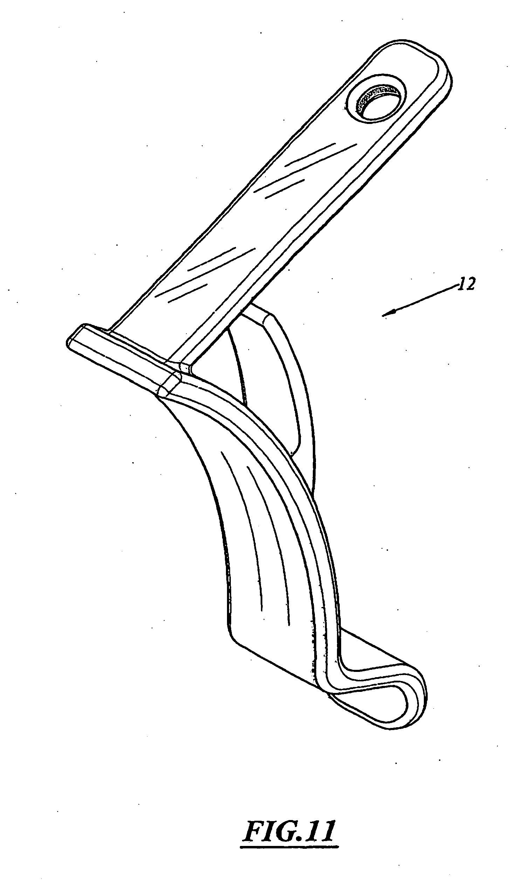

- la Figure 11 est une vue en perspective d'un cliquet de blocage du raccord de liaison selon l'invention.

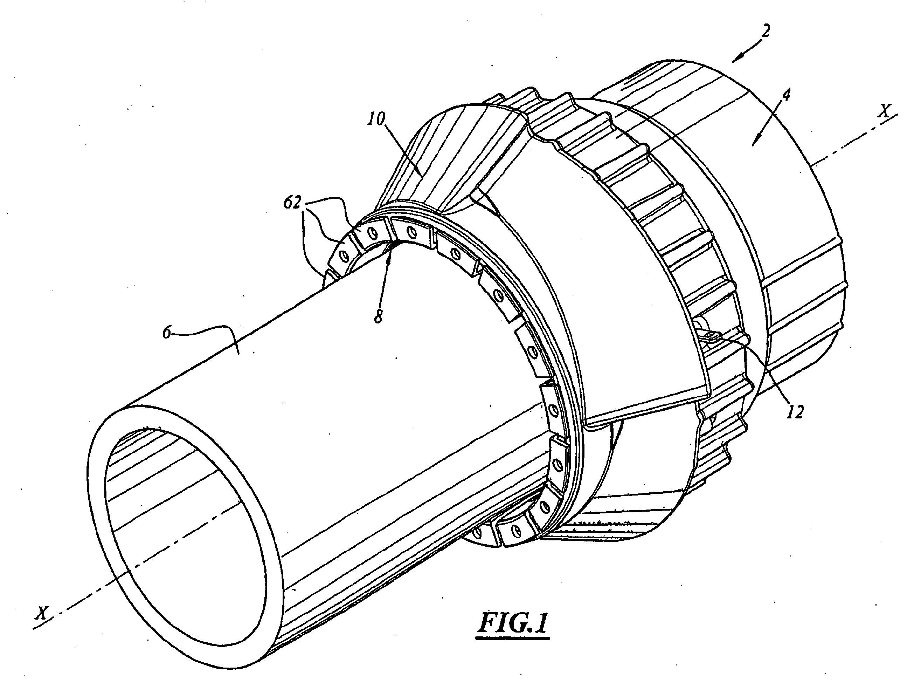

   Sur la Figure 1 est représenté un raccord de liaison selon l'invention, désigné par la référence générale 2.
   Le raccord de liaison 2 est adapté pour assurer la liaison entre un bout à emboîtement 4 d'un premier élément de canalisation et un bout uni 6 d'un second élément de canalisation, le raccord 2 comportant une bague de verrouillage 8, une contre-bride 10, ainsi qu'un cliquet de blocage 12.
   Le raccord de liaison 2 définit un axe central X-X. Dans ce qui suit les expressions "radialement", "axialement" et "circonférentiellement" seront utilisées par rapport à cet axe central X-X.
   Le bout à emboîtement 4 comporte une extrémité d'emboîtement 14 (voir Figure 2), et à l'opposé de cette extrémité 14 par exemple une bride de liaison, non représentée, pour la jonction avec un élément de canalisation adjacent. Le bout à emboîtement 4 est destiné à recevoir intérieurement l'extrémité du bout uni 6. Ainsi, il présente un diamètre intérieur supérieur au diamètre extérieur du bout uni 6. Le bout à emboîtement 4 est fabriqué en métal, par exemple en fonte, ou en tout autre matériau.
   En arrière de son extrémité d'emboîtement 14, la paroi du bout à emboîtement 4 présente une déformation périphérique extérieure 18 délimitant intérieurement une gorge périphérique 22 dans laquelle est reçue une garniture d'étanchéité 24 maintenue pressée contre la surface extérieure du bout unit 6. Cette garniture 24 assure l'étanchéité entre le bout uni 6 et le bout à emboîtement 4.
   Le bout uni 6 est fabriqué de préférence en matière plastique, telle que du poly(vinyle de chlorure), du polypropylène ou du polyéthylène.
   Comme illustré sur la Figure 7, la bague de verrouillage 8 comporte un corps de base 30, qui fait tout le tour de l'axe central X-X, à l'exception d'une fente radialement traversante non représentée, qui confère une déformabilité à la bague afin de pouvoir monter la bague 8 dans la contre-bride 10. Aussi, la bague de verrouillage 8 est élastiquement déformable. Le corps de base 30 comporte deux saillies axiales 34 diamétralement opposées par rapport à l'axe central X-X, qui s'étendent à l'état monté dans des évidements 36 axiaux ménagés dans le bout à emboîtement 4 (voir Figure 6) et qui forment des moyens de solidarisation en rotation autour de l'axe central X-X de la bague de verrouillage 8 au bout à emboîtement 4.
   En outre, chaque saillie 34 comporte une surface crantée 34A destinée à coopérer avec le cliquet de blocage 12 (voir ci-après).
   La bague de verrouillage 8 comporte seize éléments de verrouillage 38 qui font axialement saillie du corps de base 30 et qui sont circonférentiellement espacés les uns des autres par des interstices 40. Chaque élément de verrouillage 38 comporte une surface radialement interne de verrouillage 42. De manière générale, le nombre d'éléments de verrouillage 38 est de 4 x n où n est égal à un nombre entier >2.
   En l'occurrence, chaque élément de verrouillage 38 est constitué d'un corps 59 sur lequel est fixé un insert 60 qui forme la surface de verrouillage 42. Cet insert 60 présente une surface de râpe, telle que par exemple une surface de râpe à fromage, qui est particulièrement bien adaptée pour s'accrocher sur la surface extérieure d'un bout uni 6 en matière plastique. Bien entendu, la géométrie et la rugosité de la surface de verrouillage 42 ainsi que le matériau constitutif de l'insert 60 dépendent du matériau du bout uni 6.
   De plus, la bague de verrouillage 8 comporte une pluralité de pattes de démontage 62 qui s'étendent de l'extrémité libre de chaque élément de verrouillage 38 vers l'ouverture libre de la contre-bride 10 et s'étendent axialement en dehors de la contre-bride 10. Ces pattes de démontage 62 facilitent le démontage de la bague de verrouillage 8.
   Lorsque le bout uni 6 est en matière plastique, le corps de base 30 de la bague de verrouillage 8, le corps 59 des éléments de verrouillage 38 et les pattes de démontage 62 sont de préférence réalisés en matière plastique, par exemple en polyamide, tandis que les inserts 60 sont réalisés en un matériau ayant une dureté supérieure à celle du matériau constitutif du bout uni 6.
   En variante, chaque élément de verrouillage 38 est formé d'une pièce monobloc, réalisée par exemple en un matériau ayant une dureté supérieure à celle du matériau constitutif du bout uni et les surfaces de verrouillage 42 sont formées par des nervures circonférentielles ménagées dans la surface radialement interne des éléments de verrouillage 38.
   Le corps de base 30 est muni d'une gorge circonférentielle 44 qui forme une articulation élastique de chaque élément de verrouillage 38 au corps de base 30 autour d'un axe d'articulation propre Y-Y, entre une position radiale de libération dans laquelle la surface de verrouillage 42 est dégagée de la surface extérieure du bout uni 6 et une position radiale de verrouillage dans laquelle la surface de verrouillage 42 de chaque élément de verrouillage 38 s'applique sur la surface extérieure du bout uni 6.
   De préférence, dans sa position de verrouillage, la surface de verrouillage 42 s'étend sensiblement parallèlement à l'axe central X-X, ce qui conduit à un accrochage particulièrement efficace de la surface 42 sur la surface extérieure en matière plastique du bout uni 6.
   A cet effet et comme illustré sur la Figure 2, dans sa position de libération, la surface de verrouillage 42 est inclinée par rapport à l'axe central X-X d'un angle α de façon à former une surface d'entonnoir ouvert vers le côté opposé au bout à emboîtement 4. Cette inclinaison est supérieure à 0° et inférieure à 2°. On est ainsi assuré d'obtenir, après verrouillage, une surface de verrouillage 42 sensiblement parallèle à la surface extérieure du bout nui 6. De plus, cette légère inclinaison de la surface de verrouillage 42 par rapport à l'axe central X-X facilite l'insertion du bout uni 6 dans le bout à emboîtement 4.
   Chaque élément de verrouillage 38 comporte une rampe extérieure 46, qui, en coupe axiale telle que représentée sur la Figure 4, est inclinée dans ou par rapport à la direction circonférentielle. Plus particulièrement, en coupe selon un plan perpendiculaire à l'axe central X-X, la rampe 46 définit un segment de spirale dont l'équation, en coordonnées polaires, répond à la formule r(θ) = r₀ + k.x θ où
- r(θ) est le rayon du segment de spirale par rapport à l'axe central X-X,
- r₀ est le rayon minimal du segment de spirale à θ = 0,
- k est un paramètre > O, et
- θ est l'angle autour de l'axe central en partant du rayon r₀.
   En outre, chaque rampe 46 est inclinée par rapport à l'axe central X-X d'un angle β qui converge vers l'axe X-X lorsqu'on s'éloigne du bout à emboîtement 4, comme ceci est représenté sur la Figure 2. L'angle β est supérieur à 0° et de préférence comprise entre 10 et 25°.
   En outre, plusieurs éléments de verrouillage 38 adjacents forment un groupe 38A d'éléments de verrouillage 38 adjacents qui, en coupe selon un plan perpendiculaire à l'axe central X-X, définissent un segment de spirale de même équation polaire.
   En l'occurrence, la bague de verrouillage 8 comporte quatre groupes 38A d'éléments de verrouillage 38 dont chaque groupe est constitué de quatre éléments de verrouillage 38. Bien entendu, en variante la bague de verrouillage 38 peut avoir plus de quatre éléments de verrouillage 38 par groupe, et/ou plus de groupes d'éléments de verrouillage. Chaque groupe 38A s'étend sur une plage angulaire d'environ 90° autour de l'axe central X-X. Chaque élément de verrouillage 38 s'étend circonférentiellement sur une plage angulaire d'environ 20°.
   Comme ceci est représenté sur la Figure 4, la contre-bride 10 comporte pour chaque groupe 38A d'éléments de verrouillage 38 une contre-rampe 50. Cette contre-rampe 50 est adaptée pour déplacer radialement le ou chaque élément de verrouillage 38 du groupe 38A associé entre ses positions de libération et de verrouillage et ce exclusivement par une rotation de la contre-bride 10 autour de l'axe central X-X par rapport à la bague de verrouillage 8, sans déplacement axial de la contre-bride 10.
   A cet effet, chaque contre-rampe 50 définit, en coupe selon un plan perpendiculaire à l'axe central X-X, un segment de spirale dont l'équation, en coordonnées polaires, répond à la formule r(θ) = r'₀ + k.x θ où
- r(θ) est le rayon du segment de spirale par rapport à l'axe central,
- r'₀ est le rayon minimal du segment de spirale à θ = 0,
- k est un paramètre > O, et
- θ est l'angle autour de l'axe central à partir du rayon r'₀.

De plus les surfaces des contre-rampes 50 sont, en coupe longitudinale selon l'axe X-X, inclinées par rapport à cet axe central d'un angle correspondant à l'angle β d'inclinaison des rampes 46. Ainsi, en combinaison avec les rampes inclinées 46 et au cas où la contre-bride 10 n'est pas tournée suffisamment pour serrer correctement les surfaces de verrouillage 42 contre le bout uni 6, les éléments de verrouillage 38 sont sollicités contre le bout uni 6 par un déplacement axial de la bague de verrouillage 8 par rapport à la contre-bride 10 lors de la mise en pression du raccord 2.

De préférence, les rampes 46 et les contre-rampes 50 sont disposées symétriquement autour de l'axe central X-X, ce qui repartit circonférentiellement les forces de serrage.

La contre-bride 10 et le bout à emboîtement 4 comprennent des moyens de liaison exclusivement en rotation autour de l'axe central X-X de la contre-bride 10 par rapport à la bague de verrouillage 8, entre les positions de la contre-bride 10 correspondant aux positions de verrouillage et de libération des éléments de verrouillage 38. Ces moyens de liaison exclusivement en rotation comprennent d'une part une pluralité d'ergots 52 faisant saillie radialement vers l'extérieur sur le bout à emboîtement 4 ainsi qu'une pluralité de rainures 54 radialement internes ménagées dans la contre-bride 10 et s'étendant exclusivement selon la direction circonférentielle.

Des décrochements axiaux 56 ménagés dans la contre-bride 10 permettent l'accès des ergots 52 aux rainures 54 selon une liaison du type baïonnette. Il est à noter que la fabrication des rainures circonférentielles 54 est particulièrement facile par rapport à des rainures hélicoïdales connues de l'état de la technique.

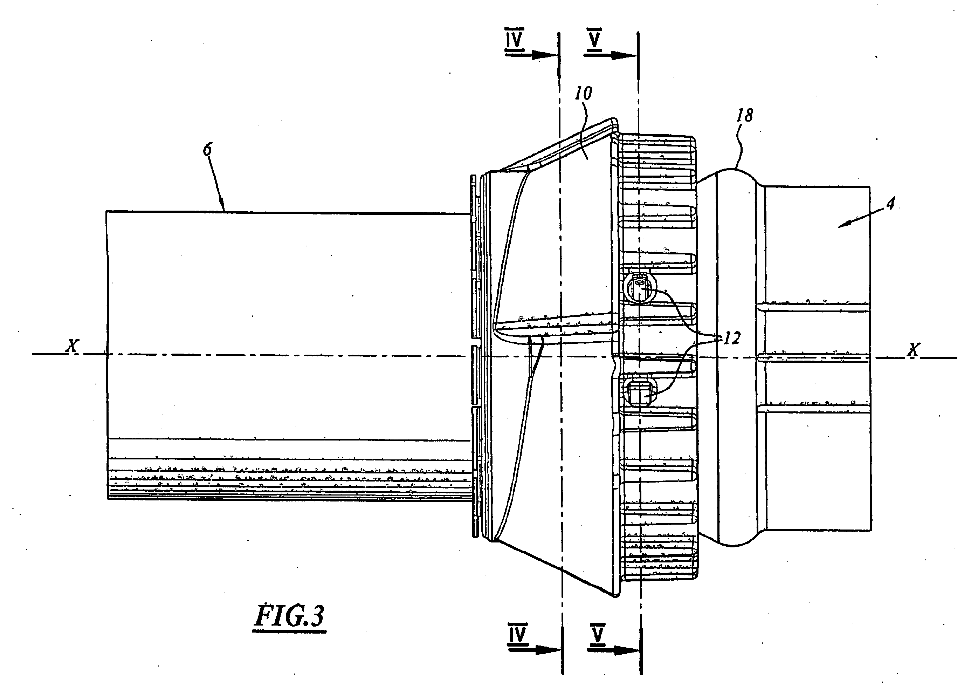

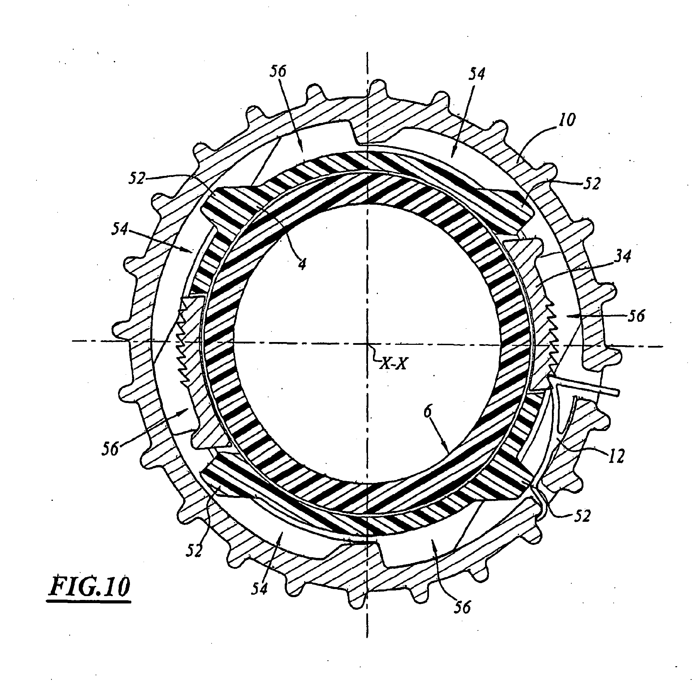

Le cliquet de blocage 12 est un élément en V dont les branches sont élastiques. Il est de préférence réalisé en matière plastique, par exemple en polyamide. Le cliquet 12 est disposé entre la contre-bride 10 et la bague de verrouillage 8 et est adapté pour coopérer avec la surface crantée 34A lorsque la contre-bride 10 est dans sa position de verrouillage (voir Figure 10), de manière à s'opposer à tout déverrouillage accidentel. Les extrémités libres des deux branches du cliquet 12 traversent des orifices ménagés dans la contre-bride 10 et font ainsi saillie en dehors de la contre-bride 10 (voir Figure 3).

En variante, les contre-rampes 50 peuvent être remplacées par d'autres organes d'actionnement, par exemple des doigts d'actionnement adaptés pour déplacer les éléments de verrouillage. De plus, les rampes 46 peuvent être situées sur la contre-bride, tandis que les organes d'actionnement sont situés sur la bague de verrouillage.

## Revendications

1. Raccord de liaison entre un bout à emboîtement (4) et un bout uni (6), du type définissant un axe central (X-X) et comportant
- au moins un élément de verrouillage (38) muni d'une surface de verrouillage (42), radialement mobile par rapport à l'axe central (X-X) entre une position de libération dans laquelle la surface de verrouillage (42) est dégagée d'une surface extérieure du bout uni (6) et une position de verrouillage dans laquelle la surface de verrouillage (42) s'applique sur la surface extérieure du bout uni (6),
- une contre-bride (10) adaptée pour déplacer l'élément ou chaque élément de verrouillage (38) entre sa position de libération et sa position de verrouillage,
- au moins une rampe (46) disposée sur l'un des éléments de verrouillage (38) ou contre-bride (10),
- un organe d'actionnement (50) de la ou de chaque rampe (46) disposé sur l'autre des éléments de verrouillage (38) ou contre-bride (10),
**caractérisé en ce que** la ou chaque rampe (46) est inclinée dans la direction circonférentielle autour de l'axe central (X-X) et **en ce que** l'organe d'actionnement (50) est adapté pour déplacer l'élément ou chaque élément de verrouillage entre ses positions de libération et de verrouillage en agissant sur la ou chaque rampe (46) par une rotation de la contre-bride (10) autour de l'axe central (X-X) par rapport à l'élément de verrouillage.

2. Raccord de liaison selon la revendication 1, **caractérisé en ce que** l'organe d'actionnement (50) est adapté pour déplacer l'élément ou chaque élément de verrouillage entre ses positions de libération et de verrouillage en agissant sur la ou chaque rampe (46) et ce exclusivement par une rotation de la contre-bride (10) autour de l'axe central (X-X) par rapport à l'élément de verrouillage.

3. Raccord de liaison selon la revendication 1 ou 2, **caractérisé en ce que** l'organe d'actionnement est une contre-rampe (50) complémentaire de la rampe (46).

4. Raccord de liaison selon l'une quelconque des revendications 1 à 3, **caractérisé en ce que** la rampe (46) est disposée sur l'élément ou chaque élément de verrouillage (38), et **en ce que** l'organe d'actionnement (50) est disposé sur la contre-bride (10).

5. Raccord de liaison selon l'une quelconque des revendications précédentes, **caractérisé en ce que** la ou chaque rampe (46) définit, en coupe selon un plan perpendiculaire à l'axe central (X-X), un segment de spirale.

6. Raccord de liaison selon la revendication 5, **caractérisé en ce que** le segment de spirale a une équation qui, en coordonnées polaires, répond à la formule r(θ) = r₀ + k.x θ où
- r(θ) est le rayon du segment de spirale par rapport à l'axe central,
- r₀ est le rayon minimal du segment de spirale à θ = 0,
- k est un paramètre > O, et
- θ est l'angle autour de l'axe central.

7. Raccord de liaison selon l'une quelconque des revendications précédentes, **caractérisé en ce qu'**il comprend au moins deux rampes (46) disposées symétriquement autour de l'axe central (X-X), ainsi que deux contre-rampes (50) complémentaires des rampes (46).

8. Raccord de liaison selon l'une quelconque des revendications précédentes, **caractérisé en ce que** la ou chaque rampe (46) est également inclinée par rapport à l'axe central (X-X) d'un angle (β) qui converge vers l'axe central (X-X) lorsqu'on s'éloigne du bout à emboîtement(4).

9. Raccord de liaison selon l'une quelconque des revendications précédentes, **caractérisé en ce qu'**il comprend des moyens de solidarisation (34, 36) en rotation autour de l'axe central (X-X) de l'élément ou des éléments de verrouillage (38) avec le bout à emboîtement (4) ainsi que des moyens de liaison (52, 54) exclusivement en rotation autour de l'axe central (X-X) de la contre-bride (10) avec le bout à emboîtement (4), de telle sorte que lors d'une rotation de la contre-bride, les éléments de verrouillage (38) restent immobiles axialement selon l'axe central (X-X).

10. Raccord de liaison selon la revendication 9, **caractérisé en ce que** les moyens de solidarisation en rotation comprennent au moins une saillie axiale (34) solidaire d'un élément de verrouillage (38), la saillie (34) s'étendant dans un évidemment (36) axial complémentaire ménagé dans le bout à emboîtement (4).

11. Raccord de liaison selon la revendication 9 ou 10, **caractérisé en ce que** les moyens de liaison exclusivement en rotation comprennent une rainure (54) exclusivement circonférentielle ménagée dans l'un de la contre-bride (10) ou du bout à emboîtement (4) et un ergot (52) radial complémentaire de la rainure et disposé sur l'autre du bout à emboîtement (4) ou de la contre-bride (10).

12. Raccord de liaison selon l'une quelconque des revendications précédentes, **caractérisé en ce que** les éléments de verrouillage (38) sont disposés sur une bague de verrouillage (8) déformable élastiquement.

13. Raccord de liaison selon l'une quelconque des revendications précédentes, **caractérisé en ce que** l'élément ou chaque élément de verrouillage (38) est mobile entre sa position de libération et sa position de verrouillage en rotation autour d'un axe de basculement (Y-Y) décalé de l'axe central (X-X) et perpendiculaire à celui-ci, et **en ce que** dans sa position de libération, la surface de verrouillage (42) est inclinée d'un angle supérieur à O° par rapport à l'axe central (X-X).

14. Raccord de liaison selon l'une quelconque des revendications précédentes, **caractérisé en ce que**, dans sa position de verrouillage, la surface de verrouillage (42) est sensiblement parallèle à l'axe central (X-X).

15. Raccord de liaison selon l'une quelconque des revendications précédentes, **caractérisé en ce qu'**il comporte des moyens de blocage (12) en rotation de la contre-bride (10) par rapport à l'élément ou à chaque élément de verrouillage (38) lorsque l'élément ou chaque élément de verrouillage (38) se trouve dans sa position de verrouillage.

16. Raccord de liaison selon la revendication 15, **caractérisé en ce que** les moyens de blocage en rotation comprennent un cliquet élastique (12) disposé entre la contre-bride (10) et au moins un élément de verrouillage (38) et coopérant avec une surface crantée (34A) solidaire de cet élément de verrouillage (38).

17. Raccord de liaison selon l'une quelconque des revendications précédentes, **caractérisé en ce que** l'élément ou chaque élément de verrouillage (38) est muni d'une patte de démontage (62) s'étendant en dehors d'une ouverture de la contre-bride (10).

## Claims

1. A coupling between a fitting end (4) and a smooth end (6) of the type defining a central axis (X-X) and comprising
- at least one locking element (38) provided with a locking surface (42), radially moveable in relation to the central axis (X-X) between a release position in which the locking surface (42) is freed from an outer surface of the smooth end (6) and a locking position in which the locking surface (42) is applied to the outer surface of the smooth end (6),
- a counter flange (10) adapted to move the locking element or each locking element (38) between its release position and its locking position,
- at least one rail (46) disposed on one of the locking (38) or counter flange (10) elements,
- an actuation component (50) of the or of each rail (46) disposed on the other of the locking (38) or counter flange (10) elements,
**characterised in that** the or each rail (46) is inclined in the circumferential direction about the central axis (X-X) and **in that** the actuation component (50) is adapted to move the locking element or each locking element between its release and locking positions by acting upon the or each rail (46) by a rotation of the counter flange (10) about the central axis (X-X) in relation to the locking element.

2. The coupling according to Claim 1, **characterised in that** the actuation component (50) is adapted to move the locking element or each locking element between its release and locking positions by acting upon the or each rail (46) exclusively by a rotation of the counter flange (10) about the central axis (X-X) in relation to the locking element.

3. The coupling according to Claim 1 or 2, **characterised in that** the actuation component is a counter rail (50) complementary to the rail (46).

4. The coupling according to any of Claims 1 to 3, **characterised in that** the rail (46) is disposed on the locking element or each locking element (38) and **in that** the actuation component (50) is disposed on the counter flange (10).

5. The coupling according to any of the preceding claims, **characterised in that** the or each rail (46) defines, in a cross-section according to a perpendicular plane to the central axis (X-X), a spiral segment.

6. The coupling according to Claim 5, **characterised in that** the spiral segment has an equation which, in polar coordinates, corresponds to the formula r(θ) = rₒ + k.x θ where
- r(θ) is the radius of the spiral segment in relation to the central axis,
- rₒ is the minimum radius of the spiral segment with θ=0,
- k is a parameter > O, and
- θ is the angle about the central axis.

7. The coupling according to any of the preceding claims, **characterised in that** it comprises at least two rails (46) disposed symmetrically about the central axis (X-X) as well as two counter rails (50) complementary to the rails (46).

8. The coupling according to any of the preceding claims, **characterised in that** the or each rail (46) is also inclined in relation to the central axis (X-X) by an angle (β) which converges towards the central axis (X-X) when one moves away from the fitting end (4).

9. The coupling according to any of the preceding claims, **characterised in that** it comprises solidarisation means (34, 36) in rotation about the central axis (X-X) of the locking element or locking elements (38) with the fitting end (4) and attachment means (52, 54) exclusively in rotation about the central axis (X-X) of the counter flange (10) with the fitting end (4) such that upon a rotation of the counter flange, the locking elements (38) remain immobile axially according to the central axis (X-X).

10. The coupling according to Claim 9, **characterised in that** the solidarisation means in rotation comprise at least one axial projection (34) integral to a locking element (38), the projection (34) extending into a complementary axial recess (36) made in the fitting end (4).

11. The coupling according to Claim 9 or 10, **characterised in that** the attachment means exclusively in rotation comprise an exclusively circumferential groove (54) made in one of the counter flange (10) or the fitting end (4) and a radial lug (52) complementary to the groove and disposed on the other of the fitting end (4) or of the counter flange (10).

12. The coupling according to any of the preceding claims, **characterised in that** the locking elements (38) are disposed on an elastically locking ring (8).

13. The coupling according to any of the preceding claims, **characterised in that** the locking element or each locking element (38) is moveable between its release position and its locking position in rotation about a tilting axis (Y-Y) offset from the central axis (X-X) and perpendicular to the latter, and **in that** in its release position the locking surface (42) is inclined by an angle greater than O° in relation to the central axis (X-X).

14. The coupling according to any of the preceding claims, **characterised in that**, in its locking position, the locking surface (42) is substantially parallel to the central axis (X-X).

15. The coupling according to any of the preceding claims, **characterised in that** it comprises blocking means (12) in rotation of the counter flange (10) in relation to the locking element or to each locking element (38) when the locking element or each locking element (38) is located in its locking position.

16. The coupling according to Claim 15, **characterised in that** the blocking means in rotation comprise an elastic catch (12) disposed between the counter flange (10) and at least one locking element (38) and co-operating with a notched surface (34A) integral to this locking element (38).

17. The coupling according to any of the preceding claims, **characterised in that** the locking element or each locking element (38) is provided with a disassembly leg (62) extending outside of an opening in the counter flange (10).

## Patentansprüche

1. Verbindungsanschluss zwischen einem Muffen-Endstück (4) und einem glatten Endstück (6), des Typs, der eine Zentralachse (X-X) definiert und aufweist:
- mindestens ein Verriegelungselement (38), das mit einer Verriegelungsfläche (42) versehen ist, das relativ zu der Zentralachse (X-X) radial zwischen einer Freigabeposition, in der die Verriegelungsfläche (42) von einer Außenfläche des glatten Endstücks (6) frei ist, und einer Verriegelungsposition, in der die Verriegelungsfläche (42) auf der Außenfläche des glatten Endstücks (6) aufliegt, bewegbar ist,
- einen Gegenflansch (10), der zum Bewegen des oder jedes Verriegelungselements (38) zwischen seiner Freigabeposition und seiner Verriegelungsposition eingerichtet ist,
- mindestens eine Rampe (46), die auf einem der Verriegelungselemente (38) oder des Gegenflansches (10) positioniert ist,
- ein Betätigungsmittel (50) der oder jeder Rampe (46), das auf dem anderen der Verriegelungselemente (38) oder des Gegenflansches (10) positioniert ist,
- **dadurch gekennzeichnet, dass** die oder jede Rampe (46) in der Umfangsrichtung um die Zentralachse (X-X) geneigt ist, und dass das Betätigungsmittel (50) zum Bewegen des oder jedes Verriegelungselements zwischen seiner Freigabeposition und seiner Verriegelungsposition eingerichtet ist, indem es durch ein Drehen des Gegenflansches (10) um die Zentralachse (X-X) relativ zu dem Verriegelungselement auf die oder jede Rampe (46) einwirkt.

2. Verbindungsanschluss gemäß Anspruch 1, **dadurch gekennzeichnet, dass** das Betätigungsmittel (50) zum Bewegen des oder jedes Verriegelungselements zwischen seiner Freigabeposition und seiner Verriegelungsposition eingerichtet ist, indem es auf die oder jede Rampe (46) und dies ausschließlich durch ein Drehen des Gegenflansches (10) um die Zentralachse (X-X) relativ zu dem Verriegelungselement einwirkt.

3. Verbindungsanschluss gemäß Anspruch 1 oder 2, **dadurch gekennzeichnet, dass** das Betätigungsmittel eine Gegenrampe (50) ist, die komplementär zu der Rampe (46) ist.

4. Verbindungsanschluss gemäß einem der Ansprüche 1 bis 3, **dadurch gekennzeichnet, dass** die Rampe (46) auf dem oder jedem Verriegelungselement (38) angeordnet ist, und dass das Betätigungsmittel (50) auf dem Gegenflansch (10) angeordnet ist.

5. Verbindungsanschluss gemäß einem der vorhergehenden Ansprüche, **dadurch gekennzeichnet, dass** die oder jede Rampe (46) im Schnitt entlang einer Ebene senkrecht zu der Zentralachse (X-X) einen Spiralabschnitt definiert.

6. Verbindungsanschluss gemäß Anspruch 5, **dadurch gekennzeichnet, dass** der Spiralabschnitt eine Gleichung hat, die in Polarkoordinaten der Formel r(θ) = r₀ + k.x θ entspricht, wobei:
- r(θ) der Radius des Spiralabschnitts relativ zu der Zentralachse ist,
- r₀ der minimale Radius des Spiralsegments bei θ = 0 ist,
- k ein Parameter > O ist, und
- θ der Winkel um die Zentralachse ist.

7. Verbindungsanschluss gemäß einem der vorhergehenden Ansprüche, **dadurch gekennzeichnet, dass** er mindestens zwei Rampen (46), die symmetrisch um die Zentralachse (X-X) angeordnet sind, sowie zwei zu den Rampen (46) komplementäre Gegenrampen (50) aufweist.

8. Verbindungsanschluss gemäß einem der vorhergehenden Ansprüche, **dadurch gekennzeichnet, dass** die oder jede Rampe (46) relativ zu der Zentralachse (X-X) um einen Winkel (β) gleich geneigt ist, der mit der Entfernung von dem Muffen-Endstück (4) in Richtung zu der Zentralachse konvergiert.

9. Verbindungsanschluss gemäß einem der vorhergehenden Ansprüche, **dadurch gekennzeichnet, dass** er aufweist: Mittel zum festen Verbinden (34, 36) durch Drehen um die Zentralachse (X-X) des Verriegelungselements oder der Verriegelungselemente (38) mit dem Muffen-Endstück (4), sowie Mittel zum Verbinden (52, 54) ausschließlich durch Drehen um die Zentralachse (X-X) des Gegenflansches mit dem Muffen-Endstück (4), so dass bei einem Drehen des Gegenflansches die Verriegelungselemente (38) axial entlang der Zentralachse (X-X) unbeweglich bleiben.

10. Verbindungsanschluss gemäß Anspruch 9, **dadurch gekennzeichnet, dass** die Mittel zum festen Verbinden durch Drehen mindestens einen axialen Vorsprung (34) aufweisen, der mit einem Verriegelungselement (38) einstückig ist, wobei sich der Vorsprung (34) in einer komplementären axialen Aussparung (36) erstreckt, die in dem Muffen-Endstück (4) angeordnet ist.

11. Verbindungsanschluss gemäß Anspruch 9 oder 10, **dadurch gekennzeichnet, dass** die Mittel zum Verbinden ausschließlich durch Drehen eine ausschließlich umlaufende Nut (54), die in einem von dem Gegenflansch (10) oder dem Muffen-Endstück (4) angeordnet ist, und eine radiale Nase (52) aufweisen, die komplementär zu der Nut ist und an dem anderen von dem Muffen-Endstück (4) oder dem Gegenflansch (10) angeordnet ist.

12. Verbindungsanschluss gemäß einem der vorhergehenden Ansprüche, **dadurch gekennzeichnet, dass** die Verriegelungselemente (38) auf einem Verriegelungsring (8) angeordnet sind, der elastisch verformbar ist.

13. Verbindungsanschluss gemäß einem der vorhergehenden Ansprüche, **dadurch gekennzeichnet, dass** das oder jedes Verriegelungselement (38) zwischen seiner Freigabeposition und seiner Verriegelungsposition durch Drehen um eine Schwenkachse (Y-Y), die gegen die Zentralachse (X-X) versetzt und senkrecht zu dieser ist, bewegbar ist, und dass die Verriegelungsfläche (42) in der Freigabeposition um einen Winkel von größer als O° relativ zu der Zentralachse (X-X) geneigt ist.

14. Verbindungsanschluss gemäß einem der vorhergehenden Ansprüche, **dadurch gekennzeichnet, dass** die Verriegelungsfläche (42) in ihrer Verriegelungsposition im Wesentlichen parallel zu der Zentralachse (X-X) ist.

15. Verbindungsanschluss gemäß einem der vorhergehenden Ansprüche, **dadurch gekennzeichnet, dass** er Mittel (12) aufweist zum Blockieren durch Drehen des Gegenflansches (10) relativ zu dem oder jedem Verriegelungselement (38), wenn sich das oder jedes Verriegelungselement (38) in seiner Verriegelungsposition befindet.

16. Verbindungsanschluss gemäß Anspruch 15, **dadurch gekennzeichnet, dass** die Mittel zum Blockieren durch Drehen eine elastische Sperrklinke (12) aufweisen, die zwischen dem Gegenflansch (10) und mindestens einem Verriegelungselement (38) positioniert ist und mit einer Rastfläche (34A) zusammenwirkt, die mit dem Verriegelungselement (38) einstückig ist.

17. Verbindungsanschluss gemäß einem der vorhergehenden Ansprüche, **dadurch gekennzeichnet, dass** das oder jedes Verriegelungselement (38) mit einer Demontier-Lasche (62) versehen ist, die sich von einer Öffnung des Gegenflansches (10) nach außen erstreckt.
